(19) Europäisches Patentamt
European Patent Office
Office européen des brevets

(11) **EP 1 163 558 B1**

(12) **EUROPÄISCHE PATENTSCHRIFT**

(45) Veröffentlichungstag und Bekanntmachung des Hinweises auf die Patenterteilung:
**14.08.2002  Patentblatt 2002/33**

(21) Anmeldenummer: **00918801.2**

(22) Anmeldetag: **16.03.2000**

(51) Int Cl.7: **G05D 23/19**, F24D 19/10

(86) Internationale Anmeldenummer:
**PCT/EP00/02324**

(87) Internationale Veröffentlichungsnummer:
**WO 00/57256 (28.09.2000 Gazette 2000/39)**

(54) **VERFAHREN ZUR ENERGIESPARENDEN HEIZUNGSREGELUNG**

ENERGY-SAVING METHOD FOR ADJUSTING A HEATING SYSTEM

REGULATION DU CHAUFFAGE A DES FINS D'ECONOMIE D'ENERGIE

(84) Benannte Vertragsstaaten:
**AT BE CH CY DE DK ES FI FR GB GR IE IT LI LU MC NL PT SE**

(30) Priorität: **20.03.1999  DE 19912590**

(43) Veröffentlichungstag der Anmeldung:
**19.12.2001  Patentblatt 2001/51**

(73) Patentinhaber: **KSB Aktiengesellschaft 67227 Frankenthal (DE)**

(72) Erfinder: **HÜNTRUP, Volker D-76137 Karlsruhe (DE)**

(56) Entgegenhaltungen:
| | |
|---|---|
| **EP-A- 0 352 401** | **DE-A- 3 202 168** |
| **DE-A- 3 713 185** | **DE-A- 4 118 799** |
| **DE-A- 4 446 974** | **DE-C- 19 646 314** |
| **GB-A- 2 301 430** | |

**Beschreibung**

Die Erfindung betrifft eine Regelung einer Heizungsanlage, wobei eine in ein Rohrleitungssystem der Heizungsanlage integrierte Mischarmatur eine Vorlauftemperatur beeinflußt.

**1 Stand der Technik**

**1.1 Die Vorlauftemperaturregelung**

Aus der Gleichung

$$\dot{Q}_{HK} = \dot{m}c(t_v - t_r) = mc\Delta t_{HK} \tag{1.1}$$

folgt, daß die Regelung der Wärmeabgabe durch die Veränderung der Temperaturspreizung zwischen Vorlauf und Rücklauf bei konstantem Massenstrom möglich ist: Dabei regelt man die Vorlauftemperatur $t_v$. Je niedriger $t_v$ ist, desto geringer ist das Temperaturgefälle zwischen Heizkörper- und Raumtemperatur und desto langsamer wird Wärme vom Heizkörper an den Raum abgegeben. Das bedeutet, daß die Rücklauftemperatur $t_r$ des Heizungswassers nicht im gleichen Maße sinkt wie die Vorlauftemperatur. Die Wärmeabgabe des Heizkörpers verändert sich. Die Wärmeabgabekurve bei unterschiedlichen Auslegungsausnutzungsgraden

$$E_A \ (E = \frac{\Delta t_{HK}}{t_v - T_i})$$

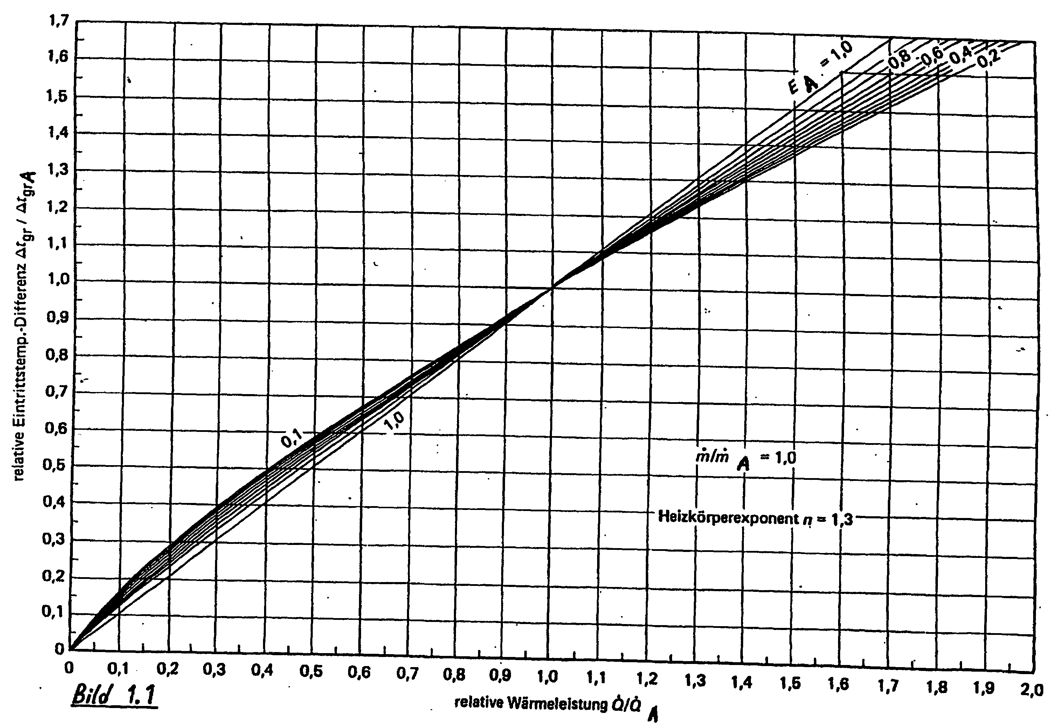

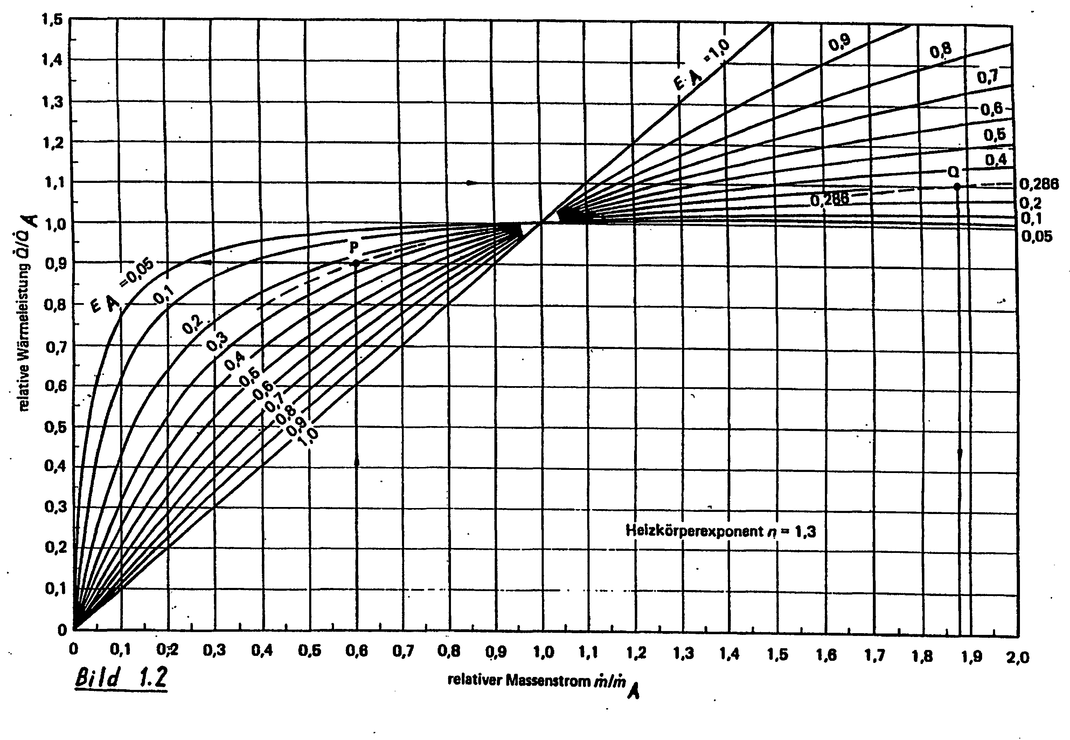

sieht bei dieser Regelungsart gemäß Bild 1.1 aus.

Man erkennt deutlich, daß man über den gesamten Regelbereich einen nahezu linearen Verlauf erhält. Ein solcher Verlauf ist in der Regelungstechnik stets erwünscht und macht die Vorlauftemperaturregelung zu der gängigen Heizungsregelungsart. Dabei realisiert man die Veränderung der Vorlauftemperatur i.d.R. dadurch, daß man dem Vorlaufwasser kälteres Rücklaufwasser beimischt. Gesteuert wird die Vorlauftemperatur dabei über einen Außentemperaturfühler.

Die Vorlauftemperatur wird allen Heizkörpern zentral angeboten. Da das Temperaturempfinden eines jeden Menschen jedoch unterschiedlich ist, muß es eine Möglichkeit geben, die Wärmeabgabe vor Ort zu regeln. Hierzu wird die Massenstromregelung herangezogen. Über ein Ventil am Heizkörper läßt sich der Massenstrom einregulieren, der zur gewünschten Wärmeabgabe führt.

**1.2 Die Massenstromregelung**

Aus Gleichung (1.1) ist ersichtlich, daß die Wärmeabgabe eines Heizkörpers über den Massenstrom beeinflußt werden kann. Verringert man den Massenstrom, so ist aber auch die Verweildauer des Wassers im Heizkörper länger, da die Geschwindigkeit des Mediums abnimmt. Es hat also "mehr Zeit", seine innere Wärme an den Raum abzugeben. Die Konsequenz daraus ist, daß man bei Veränderung des Massenstroms keine lineare Beeinflussung der Wärmeabgabe eines Heizkörpers erhält, da Temperaturspreizung und Massenstrom miteinander gekoppelt sind. Das tatsächliche Verhalten kann errechnet werden gemäß dem Buch "Die Warmwasserheizung", herausgegeben vom Arbeitskreis der Dozenten für Heizungstechnik, 2. völlig überarbeitete und erweiterte Auflage, R. Oldenbourg Verlag München Wien 1988, (/WWH-88/) und es ergibt sich für die gebräuchlichen Heizkörper mit Exponent n = 1,3 bei unterschiedlichen Auslegungsausnutzungsgraden $E_A$ folgende Wärmeabgabekurve gemäß Bild 1.2.

Für den Normauslegungsfall 90/70/20°C (Schreibweise $t_v/t_r/T_i[°C]$) beträgt der Ausnutzungsgrad E = 0,286. Diese Kurve ist gestrichelt gezeichnet. Dem Diagramm kann eine starke Nichtlinearität entnommen werden. Insbesondere im unteren Teillastbereich bis $\dot{m}/\dot{m}_A = 0{,}4$ bedeutet eine geringfügige Veränderung des Massenstroms eine große Veränderung der Leistungsabgabe des Heizkörpers. Oberhalb dieses Punktes liegt nur noch eine geringe Auswirkung der Massenstromregelung vor. Verdoppelt man gar den Auslegungsmassenstrom, so nimmt die Wärmeabgabe nur um 12% zu. Die Massenstromregelung hat oberhalb des o.g. Punktes also einen stark gedämpften Einfluß auf das Wärmeabgabeverhalten.

**2 Mängel am derzeitigen Stand der Technik**

Die Vorlauftemperaturregelung hat sich in der Heizungsregelungtechnik durchgesetzt und wird häufig mit einer drehzahlgeregelten Pumpe kombiniert. Um bei dieser Anordnung zu einem akzeptablen Regelergebnis zu kommen, werden verschiedene Regelelemente eingesetzt, die sich alle auf den Druckverlust in der Anlage negativ auswirken und so zu einer erhöhten Energieaufnahme der Pumpe oder zu einem schlechten Regelergebnis führen. Weiterhin stellt in der Anlaufphase nach einer Nacht- oder Wochenendabschaltung ein großes Problem dar. Pumpennahe Heizkörper werden überversorgt, pumpenferne Heizkörper erreichen ihre Solltemperatur nicht.

Im Teillastbereich, in dem die Heizung fast immer betrieben wird, muß der Wärmebedarf und dem ihm zugeordnete Massenstrom exakt bekannt sein. Eine geringe Abweichung vom Sollmassenstrom führt zu großen Abweichungen von der benötigten Wärmeabgabe (s. Bild 1.2), was zu einem schlechtem Komfort für die Bewohner führt. Die Thermostatventile regeln zeitweise in ON/OFF-Regelung oder es kommt zu unangenehmen Pfeifgeräuschen, die allerdings seit kurzem aufgrund der Heizungsanlagenverordnung in jedem Fall zu vermeiden sind. Sowohl aus energetischer als auch aus regelungdtechnischer Sicht ist hier noch ein erhebliches Verbesserungspotential gegeben.

Der Erfindung liegt die Aufgabe zugrunde, das Regelergebnis zu verbessern, die Energieaufnahme einer Pumpe zu verringern sowie den Komfort einer Heizung zu erhöhen.

Diese Aufgabe wird gelöst mittels einer Regelung für eine Heizungsanlage, wobei eine in ein Rohrleitungssystem der Heizungsanlage integrierte Mischarmatur eine Vorlauftemperatur beeinflußt. Die Erfindung ist dabei so eingerichtet, daß in einem Betriebszustand Schwachlastfall eine Vorlauftemperaturregelung und daß im Betriebszustand Teillast- und Vollastfall eine Massenstromregelung stattfindet.

Die Erfindung ist in den Ausführungsbeispielen näher beschrieben und ist in den Zeichnungen dargestellt. Dabei zeigen im einzelnen

Bild 1.1 =     Wärmeleistungsregelung bei Vorlauftemperaturregelung (/WWH-88/, S. 78)

Bild 1.2 =     Wärmeleistungskennlinien bei Massenstromregelung (/WWH-88/, S. 75)

Bild 3.1 =     Linearisierung der Wärmeabgabe eines Heizkörpers bei Massenstromregelung

Bild 3.2 =     Regelkreis bei außentemperaturgeführter Vorlauftemperaturregelung

Bild 3.3 =     Regelkreis bei außentemperaturgeführter Massenstromregelung

Bild 3.4 =     Regelkennlinie der Pumpe bei der Massenstromregelung

Bild 3.5 =     Aufgaben des Strangregulierventils im Teillastfall

Bild 3.6 =     Prinzipskizze eines Nebenkreislaufs in einer Großheizungsanlage

**3 Lösungsansatz**

**3.1 Voraussetzungen für eine energiesparende Regelung**

Um eine energiesparende Heizungsregelung konzipieren zu können, muß zunächst einmal festgestellt werden, wo Energie ohne Nutzen verbraucht wird. Energie für die Heizung stellen Wärmeerzeuger und Pumpe zur Verfügung. Eine Überlegung zur Einsparung kann nun nur derart aussehen, daß man die Energie, die diese beiden Heizungskomponenten aufnehmen müssen, um ein einwandfreies Funktionieren der Heizung zu gewährleisten, minimiert. Da die Wärmeerzeugung nicht Gegenstand der Erfindung ist, soll die Betrachtung auf die Pumpe beschränkt bleiben und lediglich nachgeprüft werden, ob eine Leistungsaufnahmereduktion der Pumpe eine Leistungsaufnahmeerhöhung der Wärmeerzeugung nach sich ziehen würde.
Gemäß der Leistungsaufnahme

$$P_P = \frac{\Delta p_{An} \dot{V}}{\eta}$$

der Pumpe, in der der Wirkungsgrad $\eta$ als konstant angenommen werden soll, ist eine Reduktion der Energieaufnahme möglich, indem man den Druckverlust in der Anlage und/oder den Volumenstrom reduziert. Da der Druckverlust proportional zum Quadrat des Volumenstroms ist, gilt insgesamt:

$$P_P \sim \dot{V}^3 \qquad (3.1)$$

Aus diesem Zusammenhang geht direkt hervor, daß die Leistungsaufnahme der Pumpe auf ein Achtel zurückgeht, wenn man den Volumenstrom halbiert. Hier liegt also ein bedeutendes Einsparungspotential. Da der Massenstrom in einer Heizungsanlage durch den Wärmebedarf eines Raumes und die vorgesehene Temperaturspreizung festgelegt ist , kann man den Massenstrom verringern, indem man die Auslegungstemperaturspreizung erhöht. Dies kann allerdings nur bis zu einem bestimmten Grenzwert geschehen, da Vorlauf- und Rücklauftemperatur entweder physikalisch oder durch andere Randbedingungen begrenzt sind (z.B. Verbrennungsgefahr am Heizkörper für die Bewohner).
Eine andere Möglichkeit ist eine Massenstromregelung über eine Drehzahlregelung der Pumpe. Daraus ergeben sich jedoch eine ganze Reihe regelungstechnischer Probleme, die in der Literatur nachzulesen sind. Da hier aber das einzige Energieeinsparungspotential liegt, soll die beschriebene Erfindung die auftretenden Probleme lösen.
Um ein akzeptables Regelergebnis zu erhalten, muß sichergestellt sein, daß man ein annähernd lineares Verhalten der Eingangs- und Ausgangsparameter hat. Dabei soll die Steigung der Abhängigkeit zwischen Regelgröße und Stellgröße nicht zu groß sein. Aus Bild 1.2 ist ersichtlich, daß diese beiden Grundforderungen bei Massenstromregelung nicht erfüllt sind. Nach Taylor kann man aber jede Funktion um einen Betriebspunkt in eine Taylorreihe entwickeln, falls sie dort differenzierbar ist. Vernachlässigt man die Glieder höherer Ordnung, so erhält man eine Gerade:

$$f(x) = f(x_0) + \frac{df}{dx}\bigg|_{x_0} \Delta x + \frac{1}{2}\frac{d^2f}{dx^2}\bigg|_{x_0} \Delta x^2 + \ldots \qquad (3.2)$$

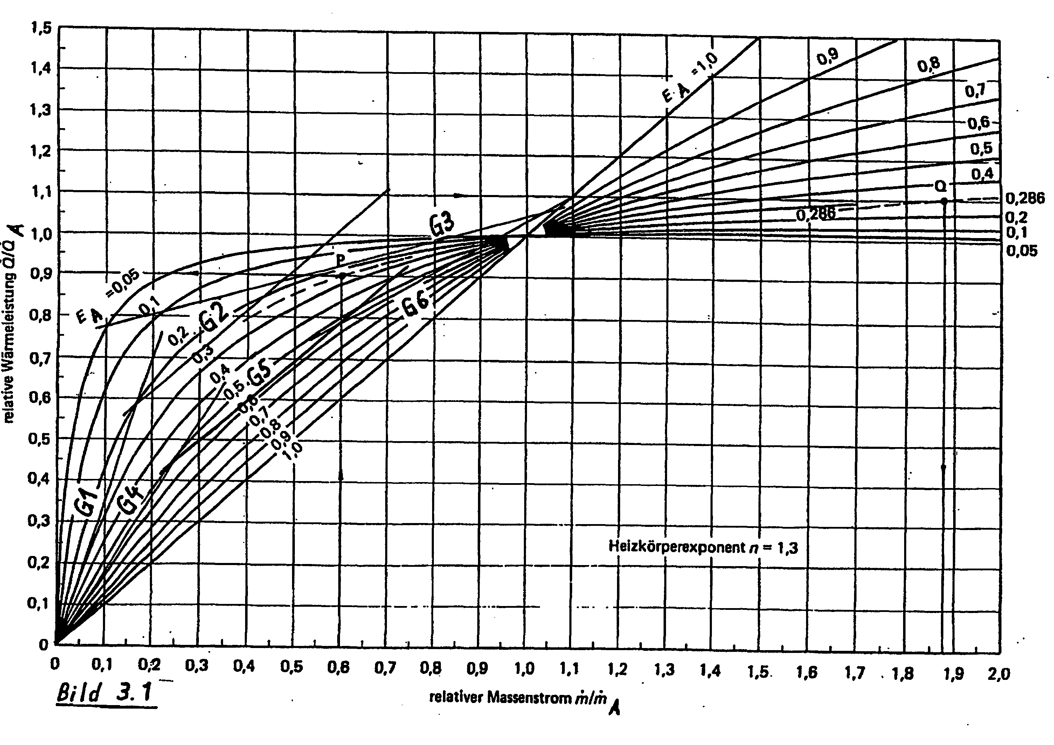

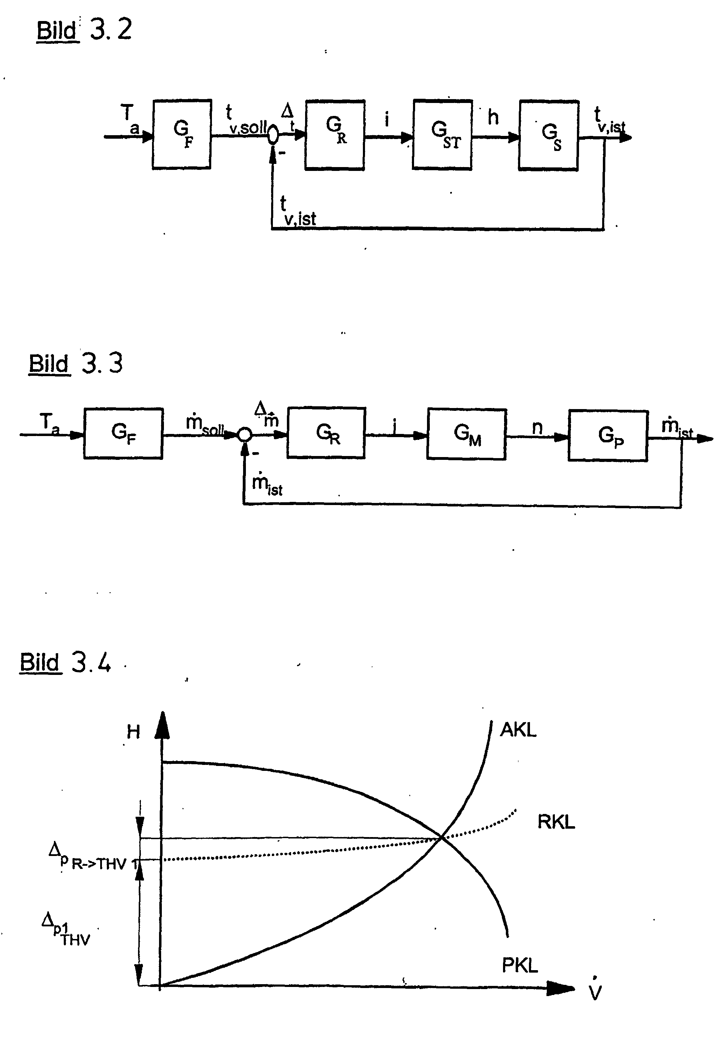

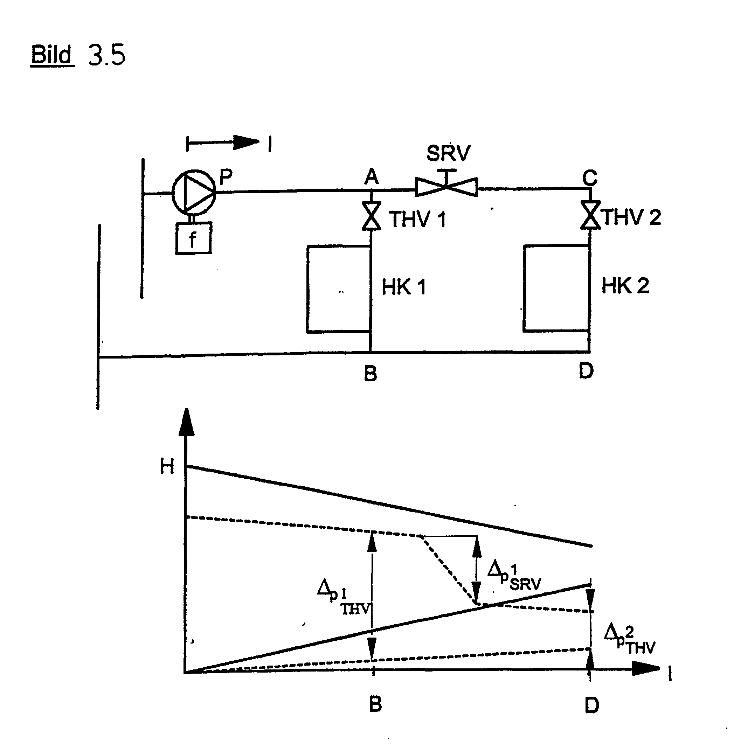

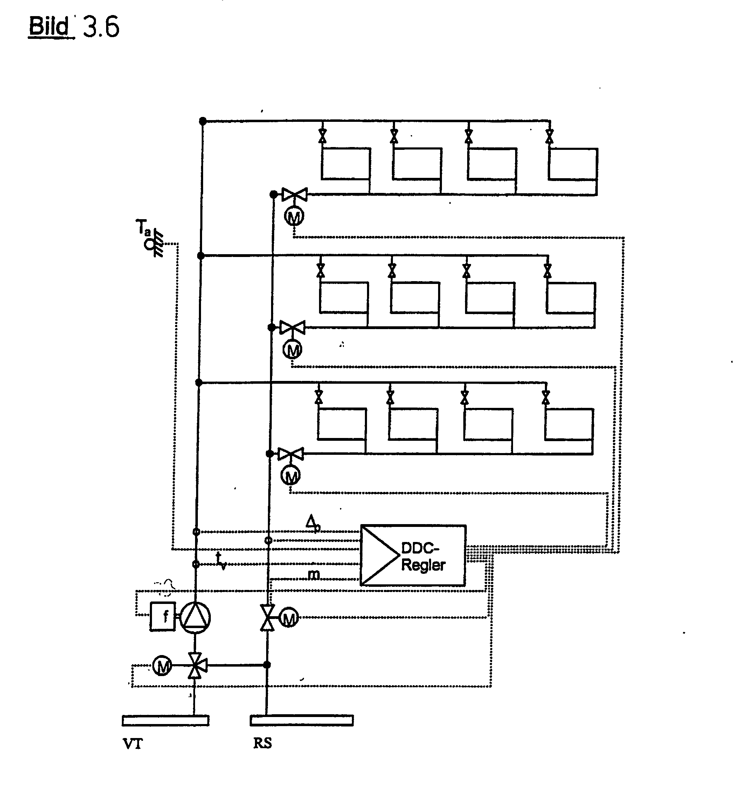

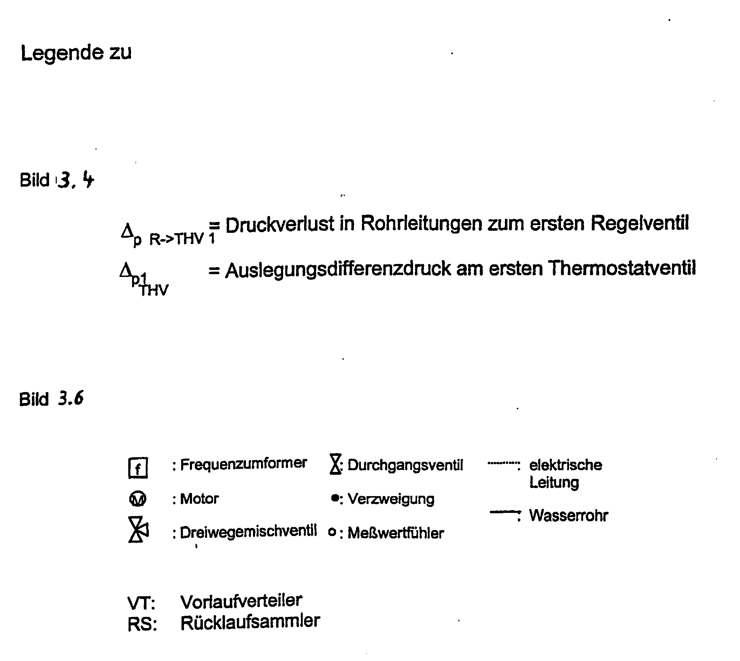

Unterteilt man die nichtlineare Funktion in mehrere Abschnitte und nähert diese Abschnitte jeweils um einen günstigen Punkt an, so läßt sich der Fehler stark reduzieren. Für eine funktionierende Massenstromregelung sollte nun die Steigung der linearisierten Funktion nicht größer als "eins" sein, da das System ansonsten zum Schwingen neigt.
Für den Auslegungsfall 90/70/20°C ist die Wärmeabgabe des Heizkörpers in Bild 3.1 durch zwei Geraden linearisiert dargestellt. Gerade G 2 hat exakt die Steigung "eins", Gerade G 3 verläuft wesentlich flacher
Die Gerade G 1 hat eine deutlich größere Steigung als "eins". In diesem Bereich ist die Leistungsabgaberegelung über den Massenstrom nicht möglich. Im Schwachlastfall muß also in jedem Fall eine Vorlauftemperaturregelung Anwendung finden. Die Kombination der beiden Verfahren mit regelungstechnischen Mitteln stellt den zentralen Teil des neuen Verfahrens dar. Auf diese Kombination wird im folgenden ausführlich eingegangen. Um jedoch eine möglichst große Energieeinsparung zu erreichen, sollte man versuchen, die Leistungsabgabe der Heizung so weit wie möglich über den Massenstrom zu regeln. Wie aus Bild 3.1 ebenfalls ersichtlich, verlaufen die Wärmeabgabefunktionen umso flacher, je höher der Ausnutzungsgrad E ist. Dies wiederum bedeutet, daß man die Massenstromregelung umso weiter ausbauen kann, je größer E wird, da die Steigung der Geraden abnimmt (Gerade G 4 im Verhältnis zu G 1). Mit dem Steigen von E ist direkt eine Verringerung des Auslegungsmassenstroms verbunden, da die Temperaturspreizung im Heizkörper umso größer ist, je größer E ist. Beides wirkt sich also positiv auf die Energieaufnahme der Pumpe aus. Auch die Wärmeerzeugerseite muß wesentlich weniger Wasser erhitzen. Deutlich ist jedoch, daß auf die Vorlauftemperaturregelung in keinem Fall verzichtet werden kann. Dies bedeutet, daß auch die Mischarmatur nicht völlig eliminiert werden kann.

### 3.2 Stör-, Führungs- und Stellgrößen

Für eine konstante Raumtemperatur $T_i$ muß die Wärmeabgabe des Heizkörpers gleich dem über die Wände nach außen fließenden Wärmeverlust sein. Es läßt sich eine Abhängigkeit der Wärmeabgabe des Heizkörpers von der Außentemperatur herstellen:

$$\dot{Q}_{HK} = \dot{m}c(t_v - t_r) = kA(T_i - T_a \qquad (3.5)$$

Da die ständig schwankende Außentemperatur $T_a$ den Wärmeverlust fortlaufend verändert, hat sie den Charakter einer Störgröße, die von der Regelung ausgeglichen werden muß. Aus der Störgröße läßt sich nach Gleichung (3.3) nun eine Sollvorlauftemperatur $t_{v, soll}$ errechnen, die als Führungsgröße fungiert. Die Vorlauftemperatur läßt sich nun über das Mischungsverhältnis zwischen Vorlaufwasser vom Kessel (KS) und Rücklaufwasser (RL) im Dreiwegeventil beeinflussen und zwar nach:

$$t_v = \frac{\dot{m}_{KS} t_{KS} + \dot{m}_{RL} t_{RL}}{\dot{m}_{ges}} \tag{3.4}$$

Das Mischungsverhältnis kann über den Ventilhub der beiden Tore des Mischventils verändert werden, so daß der Ventilhub h die Stellgröße ist. Es ergibt sich $t_{v, ist}$, das gemessen und mit der Führungsgröße verglichen wird. Der Regelkreis ist in Bild 3.2 dargestellt:

Analog dazu kann nun auch bei der Massenstromregelung vorgegangen werden. Man nimmt $T_a$ als Störgröße und verändert in ihrer Abhängigkeit den Massenstrom durch den Heizkörper. Da der Zusammenhang zwischen Außentemperatur und Massenstrom allerdings nur iterativ gegeben ist (s. /WWH-88/), muß die Beziehung aus der Linearisierung der Wärmeabgabe in Form einer Geradengleichung gewonnen werden. Dies ist der erste Teil des Verfahrens, das angemeldet werden soll. Als Beispiel sei eine Linearisierung bei Normauslegung 90/70/20°C um den Betriebspunkt $\dot{m}/\dot{m}_A = 0,7$ vorgenommen (Gerade 3). Die gewonnene Geradengleichung lautet:

$$\frac{\dot{Q}}{\dot{Q}_A} = 0,1875 \cdot \frac{\dot{m}}{\dot{m}_A} + 0,76 \frac{\dot{Q}}{\dot{Q}_A} \text{ gültig für Wärmeabgabe von } 0,84 - 1,0 \cdot \dot{Q}_A \tag{3.5}$$

Mit Hilfe von Glg. (3.3) kann nun eine eindeutige Abhängigkeit zwischen Störgröße und resultierender Führungsgröße hergestellt werden:

$$\dot{m} = \frac{0,24 \cdot \dot{Q}}{0,1875 \cdot \dot{Q}_A} \cdot \dot{m}_A = 1,28 \frac{\dot{m}_A}{\dot{Q}_A} \, kA(T_i - T_a) \tag{3.6}$$

Der Massenstrom kann gemäß den Affinitätsgesetzen (/FEL/) über die Drehzahl der Pumpe beeinflußt werden, die somit zur Stellgröße wird. Es gilt:

$$\dot{V} \sim n \tag{3.7}$$

Der Massenstrom kann über ein Strangregulierventil gemessen werden, so daß der Istwert im Regler mit dem Sollwert verglichen werden kann. Der Regelkreis bei Massenstromregelung sieht also folgendermaßen aus, vgl. Bild 3.3.

### 3.3 Anlagenkomponenten

*3.3.1 Die Dreiwegemischarmatur und ihre Regelung*

Das Mischventil muß so geregelt werden, daß das Tor für das Rücklaufwasser in dem Maße öffnet, wie sich das Kesselwassertor schließt und umgekehrt. Dadurch kann der Volumenstrom auf der Verbraucherseite konstant gehalten werden. Es ergeben sich keine hydraulischen Probleme und die Wärmeabgabe wird über die Temperatur des Mediums gesteuert. Da dies die gängige Regelungslösung ist, soll darauf nicht vertiefend eingegangen werden. Interessanter ist vielmehr, ab wann das Dreiwegemischventil nur noch als Durchgangsventil dienen soll.

Der Umschlagpunkt auf die reine Massenstromregelung ist zum einen von der Auslegung (=> Reichweite der Linearisierung) und zum ändern von der erlaubten Abweichung der "linearisierten Wärmeabgabe" von der tatsächlichen Wäremeabgabekurve abhängig. Sinnvoll ist es in jedem Fall, eher zuviel Wärme bereitzustellen als zu wenig, da der Mensch "lieber schwitzt als friert". Hält man sich bei der gegebenen Wärmeabgabefunktion an die Taylorreihenentwicklung, so ist dies auf jeden Fall gewährleistet, da die Funktion keinen Wendepunkt hat. Setzt man nun eine Erhöhung der Raumtemperatur um ein halbes Grad als unerheblich für das Wohlbefinden des Menschen voraus, so ist eine Abweichung um 2% nach oben von der tatsächlichen Wärmeabgabe erlaubt.

Diese Abweichung kann man aus Bild 3.1 ablesen. Ihr ist eine eindeutige relative Wärmemengenabgabe des Heizkörpers zugeordnet, bei der die Umstellung von Massen- auf Vorlauftemperaturregelung oder umgekehrt stattfinden muß. Bezieht man nun die Wärmeabgabe im Auslegungsfall auf die Wärmeabgabe im Umschlagpunkt, so kann hieraus eine Außentemperatur bestimmt werden, bei der die Regelungsart wechseln sollte:

$$\frac{\dot{Q}_{Um}}{\dot{Q}_A} = \frac{T_i - T_{aUm}}{T_i - T_{2A}} \Leftrightarrow T_{aUm} = T_i - \frac{\dot{Q}_{Um}}{\dot{Q}_A}(T_i - T_{aA}) \tag{3.8}$$

Damit muß ab einer Außentemperatur $T_{aUm}$ das Dreiwegemischventil das Rücklauftor komplett geschlossen halten. Die Mischarmatur hat keine regelungstechnische Funktion mehr.

*3.3.2 Die Pumpe und ihre Regelung*

Erreicht die Außentemperatur nun $T_{aUm}$, so muß auf Massenstromregelung umgeschaltet werden, was gemäß Glg (3.7) über die Drehzahl der Pumpe realisiert wird. Dazu benötigt man einen eindeutigen Zusammenhang zwischen der Pumpenförderhöhe und dem Förderstrom, den man durch die Regelkennlinie beschreiben kann. Die Regelkennlinie muß gewährleisten, daß in jedem Betriebszustand genügend Förderdruck zur Überwindung der Druckverluste erzeugt wird. Außerdem gilt es, keinen Heizkörper unterzuversorgen.

Für ein gutes Regelergebnis muß gewährleistet sein, daß an dem der Pumpe nächstgelegenen Thermostatventil stets der Auslegungsdifferenzdruck ansteht. Er stellt also eine konstante Größe dar. Weiterhin ist damit auf jeden Fall gewährleistet, daß an den nachfolgenden Ventilen genügend Differenzdruck zur Verfügung steht. Auch dies ist ein entscheidender Unterschied zu bisherigen Lösungen. Auf die geräusch- und regelungstechnischen Probleme wird im nächsten Unterkapitel eingegangen. Dem Auslegungsdifferenzdruck am ersten Thermostatheizkörperventil muß nun der Druckabfall zugeschlagen werden, der in den Rohrleitungen $1_{1,VL} + 1_{1,RL}$ zwischen Pumpe und dem am nahegelegensten Thermostatventil abfällt. Er ist volumenstromabhängig und somit variabel. Für den bereitzustellenden Förderdruck gilt also:

$$\Delta p_p = \Delta p_{THV}^1 + 8\frac{\lambda\rho}{\pi^2} \cdot \frac{1_{1.VL} + 1_{1.RL}}{d^5} \cdot \dot{V}_{TL}^2 \tag{3.9}$$

Die sich daraus ergebende Regelkennlinie ist in Bild 3.4 dargestellt:

In den unteren Bereich der Regelkennlinie wird die Pumpe nicht fahren, da das System im Schwachlastbetrieb über die Vorlauftemperatur geregelt wird. Die Pumpe arbeitet für den Fall der Vorauftemperaturregelung im Auslegungspunkt, da der Volumenstrom durch die Heizung konstant gehalten wird und daher auch ein konstanter Druckverlust entsteht.

Am Umschlagpunkt fährt die Pumpe nun auf der Regelkennlinie herunter, bis sie den Volumenstrom liefert, der der gemessenen Außentemperatur entspricht. Sinkt die Außentemperatur weiter ab, so fährt die Pumpe geregelt hoch.

*3.3.3 Das Strangregulierventil und seine Regelung*

Als unerläßlich für den Erfolg des Verfahrens müssen weitere regelungstechnische Maßnahmen getroffen werden. So sollen vorhandene Komponenten als Regelglied fungieren. Jeder Strang eines Heizungssystems muß durch ein Strangregulierventil eingeregelt werden, damit es im Vollastfall nicht zu einer Unterversorgung weit entfernter Heizkreise kommt. Verläßt das System aufgrund eines verringerten Wärmebedarfs den Vollastbetrieb, so ist dem Strangregulierventil keine weitere Aufgabe zugewiesen. Das bedeutet, daß ihm ohne Nachteil für andere Effekte eine neue Aufgabe gegeben werden kann.

Das Strangregulierventil eignet sich im Teillastfall besonders zur Stabilitätsverbesserung der Regelung und zur Geräuschvermeidung. Es ist bekannt, daß eine Pumpenregelung zur Geräuschvermeidung eigentlich den Differenzdruck am entferntesten Thermostatventil als Führungsgröße benötigt. Aufgrund der Unterversorgung der nahe an der Pumpe gelegenen Heizkörper wurde jedoch der Differenzdruck am ersten Ventil als Mindestförderhöhe der Pumpe festgesetzt. Dadurch muß der im Teillastfall überschüssige Druck abgebaut werden.

Dies kann am Strangregulierventil geschehen, indem man es mit einem Stellantrieb ausstattet und je nach Lastfall über die Ventilhubstellung den Druck abbaut (Bild 3.5):

Der Druckabfall zwischen den einzelnen Thermostatventilen der Stränge m und m + 1 soll für ein einwandfreies Regelverhalten also konstant sein. Der Druckverlust durch die Rohrleitungen zwischen diesen Strängen ist umso kleiner, je weniger Massenstrom durch sie hindurchfließt. Somit muß in einem zwischengeschalteten Strangregulierventil umso mehr Druck abgebaut werden, je geringer der Volumenstrom ist. Formelmäßig ergibt sich für den Druckabfall an einem Strangregulierventil zwischen den Strängen m und m + 1:

$$\Delta p_{SRV} = (\Delta p_{THV.A}^{m} - \Delta p_{THV.A}^{m+1}) - 8 \frac{\lambda\rho}{\pi^2} \frac{(1_{m+1,VL} + 1_{m+1,RL})}{D_{m+1}^5} \dot{V}_{TL,m+1} \tag{3.10}$$

Der Teilvolumenstrom $\dot{V}_{TL,m}$ läßt sich ermitteln, indem man vom Volumenstrom zum Strang m den Volumenstrom subtrahiert, der für die erforderliche Wärmeleistungsabgabe im Strang m benötigt wird.

Der Einbauort des Strangregulierventils ist in Bild 3.5 so gewählt, daß die Aufgabe deutlich wird. In der Praxis würde die Montage weiterhin im Strang selber geschehen, damit nicht noch mehr Ventile eingebaut werden müssen. Die Glg. (3.10) muß in diesem Fall etwas abgewandelt werden und lautet dann:

$$\Delta p_{SRV} = \left( \Delta p_{THV.A}^{m} - \Delta p_{THV.A}^{m+1} \right) - 8 \frac{\lambda\rho}{\pi^2} \sum_{m=0}^{n} \frac{\left( l_{m+1,VL} + l_{m+1,RL} \right) \dot{V}_{TL,m+1}}{d_{m+1}^5} \tag{3.11}$$

*3.3.4 Die intelligente Komponenten-Koppeleinheit*

Da die Regelung der einzelnen Komponenten voneinander abhängig ist, muß für eine Koppelung gesorgt werden. Aufgrund der vielfältigen Aufgaben, die die Koppeleinheit zu übernehmen hat, kommt dafür nur ein intelligenter, elektronischer Baustein in Frage. Die Funktionen des Bausteins reichen von Erfassen, Speichern, Rechnen bis hin zum Ausgeben von Stellsignalen. Bevor die Aufgaben, die sich aus den Kap. 3.1 - 3.3.3 ergeben, in einer Übersicht zusammengestellt werden, sollen noch zwei sehr wichtige Aufgaben beschrieben werden:

Für den Fall, daß $T_a = T_{aUm}$ ist, muß dafür gesorgt werden, daß die Umstellung von Vorlauftemperatur- auf Massenstromregelung nicht plötzlich, sondern "sanft" geschieht, da es nicht möglich ist, die Vorlauftemperatur schlagartig zu verändern. Das gleiche gilt für den Massenstrom. Es muß also ein kontrollierter Übergang stattfinden. Da der Umschlagstemperatur eine bestimmte Wärmeabgabe des Heizkörpers zugeordnet werden kann, ist die Wärmeabgabe in diesem Punkt konstant. Man kann nun den Massenstrom in Abhängigkeit von der sich ändernden Vorlauftemperatur langsam verändern. Der Zusammenhang läßt sich über Glg. (3.14) beschreiben. Dabei sind alle Größen außer A $t_{gr}$ = $t_v$ - $T_i$ und $\dot{}$ als konstant anzusehen und man erhält somit:

$$t_v = \frac{konst_1}{\dot{m} - konst_2} + T_i \tag{3.12}$$

mit:

$$konst_1 = E_A \dot{Q}/\dot{Q}_A \dot{m}_A \Delta t_{grA}$$

und

$$konst_2 = \exp(\dot{Q}/\dot{Q}_A)^{\frac{n-1}{n}} \dot{m}_A \ln(1 - E_A)$$

Ein "sanfter" Übergang ist also möglich, wenn $t_v$ und $\dot{m}$ kontinuierlich erfaßt werden. Gesondert muß nun noch der Fall behandelt werden, daß die Außentemperatur um die Umschlagstemperatur schwankt. Ein ständiges Umschalten zwischen den beiden Regelungsarten wäre für ein zufriedenstellendes Regelergebnis äußerst schlecht. Sinnvoll ist es sicherlich, daß man erst umschaltet, wenn die Außentemperatur den Umschlagwert deutlich überschritten hat. Schaltet man dabei von Vorlauftmperatur- auf Massenstromregelung, so ist $T_{aUm}^{real} < T_{aUm}^{theo}$. Wird von Massen- auf Vorlauftemperaturregelung umgeschaltet, so gilt dementsprechend: $T_{aUm}^{real} > T_{aUm}^{theo}$. Man erzeugt somit eine Hysterese. Wie groß die Abweichung der wirklichen von der theoretischen Umschlagtemperatur sein muß, kann nur in der Praxis festgestellt werden. Neben der Erzeugung der Hysterese sollte der Verlauf der Außentemperatur verfolgt werden. Ist deren Verlauf eindeutig sinkend oder steigend über mehrere Meßwerte, so kann davon ausgegangen werden, daß eine Umschaltung sich nicht negativ auf das Regelergebnis auswirkt. Schwankt die Temperatur jedoch ständig hin und her, was z.B. durch ständige Bewölkungsveränderungen hervorgerufen werden könnte, so sollte an der gerade angewandten Regelungsart festgehalten werden.

Ein bisher vernachlässigtes Problem stellt der unterschiedliche Wärmebedarf des Menschen dar. Während der eine schwitzt, friert der andere. Um dem Menschen vor Ort Einfluß auf die Wärmeabgabe der Heizkörper zu geben, werden Thermostatventile installiert. Möchte man es wärmer haben, so öffnet man sie, im anderen Fall müssen sie geschlossen werden. Das hat direkt eine unterschiedliche Massenstromanforderung zur Folge. Da das Wohlbefinden des Menschen Ziel der Heizungsregelung ist, muß der lokalen Anforderung von Massenstrom Vorrang vor der zentral geführten, außentemperaturabhängigen Bereitstellung eingeräumt werden. Die unterschiedliche Anforderung von Wärme kann durch die Veränderung des Druckabfalls in der Anlage registriert werden. Öffnet man ein Thermostatventil, so sinkt der Widerstand, andernfalls steigt er. Registriert die Koppeleinheit eine derartige Veränderung, so muß sie in jedem Fall dafür sorgen, daß genügend Massenstrom zur Verfügung steht und muß unter Mißachtung der Außentemperatur auf der Regelkennlinie verfahren. Es ist also eine Prioritätenbehandlung der Thermostatventile nötig.

Für ein derartig breites Aufgabenspektrum erscheint es sinnvoll, auf die DDC-Technik zurückzugreifen. Dabei handelt es sich um digitale Bausteine, die eben gerade die oben beschriebenen Funktionen (Erfassen, Errechnen, Speichern, Verarbeiten und Ausgeben) bereitstellen. Aufgrund der digitalen Arbeitsweise wird eine Ein/Ausgabekarte nötig sein, die aus A/D- und D/A-Wandler sowie Multiplexer bestehen dürfte. Die Koppelung an die einzelnen Komponenten muß über einen Bus geschehen.

Theoretisch wurde für dieses Verfahren der Heizungsregelung eine Energieeinsparung von bis zu 30% gegenüber dem heute üblichen Verfahren errechnet. Dadurch wird der Amortisationszeitraum bei ca. 2 Jahren für die Nutzer liegen. Sinn macht eine derartige Heizungsregelung allerdings erst in größeren Heizungsanlagen (Wohnblocks, Bürohäuser, Schulen etc.)

### 3.4 Anlagenaufbau

Nachdem die Komponenten vorgestellt und deren Aufgaben erläutert wurden, soll eine Prinzipskizze den Aufbau eines Nebenstranges in einer Heizungsanlage veranschaulichen. Dabei ist der Einbauort des Strangregulierventils wie in Bild 3.5 beibehalten.

Dargestellt sind nur die regelungstechnischen Komponenten. Sicherheitstechnische Elemente wurden zwecks Übersichtlichkeit vernachlässigt:

In der folgenden Tabelle sollen nun alle sich ergebenden Aufgaben der intelligenten Koppeleinheit zusammenfassend dargestellt werden:

Tabelle 3.1:

| Übersicht über die Aufgaben der intelligenten Komponenten-Koppeleinheit | |
|---|---|
| **Aufgabe** | **Größe** |
| Erfassen | • Außentemperatur<br>• Vorlauftemperatur<br>• Massenstrom<br>• Differenzdruck in der Anlage |
| Speichern | • Speicherung der Linearisierung der Wärmeabgabefunktion für den jeweiligen Auslegungsfall zur Herstellung des Zusammenhangs Massenstrom-Wärmeabgabe<br>• Speicherung der Umschalttemperatur als Hysterese<br>• Abspeicherung der Rohrlängen zwischen den Strängen<br>• Speicherung der Ventilkennlinien von Dreiwegemischarmatur und Strangregulierventil<br>• Speicherung von Regel- und Pumpenkennlinie |
| Errechnen • | $T_a > T_{aUm}$ => Vorlauftemperaturregelung; errechnen der Sollvorlauf-temperatur nach Glg.(3.3); Soll-Istwert-Vergleich, Stellgröße fiir Dreiwegemischarmatur aus Kennlinie ermitteln<br>• $T_a < T_{aUm}$ => Massenstromregelung; errechnen des Sollmassenstroms nach Glg. (3.6); Soll-Istwert-Vergleich, Drehzahl für Pumpe ermitteln<br>• $T_a = T_{aUm}$ => "Sanftes" Umschalten der Regelungsart nach Glg. (3.12); ständige Erfassung von Vorlauftemperatur und Massenstrom; aus Meßergebnissen Berechnung der Stellgrößen<br>• Errechnen des Druckabfalls am Strangregulierventil nach Glg. (3.11); ermitteln der Stellgröße für Antrieb des Strangregulierventils |

Tabelle 3.1: (fortgesetzt)

| Übersicht über die Aufgaben der intelligenten Komponenten-Koppeleinheit | |
|---|---|
| **Aufgabe** | **Größe** |
| | • Errechnen der Steigung des Außentemperaturverlaufs<br>• Errechnen der Pumpendrehzahl bei Massenstromanforderung durch Thermostatventile |
| Verarbeiten | • Prioritätsgebung der Massenstromanforderung durch Thermostat-ventile |
| Ausgeben | • Impuls für Stellmotoren<br>• Impuls zur Drehzahlverstellung der Pumpe |

**A Abkurzungsverzeichnis**

| | |
|---|---|
| AKL | Anlagenkennlinie |
| E | Ausnutzungsgrad |
| F | Führungsgröße |
| $F_F$ | Federkraft |
| G | Gerade/Übertragungsfunktion |
| H | Pumpenförderhöhe |
| P | Leistungsaufnahme |
| PKL | Pumpenkennlinie |
| $\dot{Q}$ | Wärmestrom |
| RKL | Regelkennlinie |
| RNKL | Rohmetzkennlinie |
| SRV | Strangregulierventil |
| $T_a$ | Außentemperatur |
| $T_i$ | Innentemperatur |
| THV | Thermostatheizkörperventil |
| $\dot{V}$ | Volumenstrom |
| c | spez. Wärmekapazität/Federkonstante |
| d | Rohrdurchmesser |
| l | Rohrlänge |
| $\dot{m}$ | Mengen-/Massenstrom |
| n | Heizkörperexponent/Drehzahl |
| p | Druck |
| $\Delta p$ | Druckverlust |
| $t_r$ | Rücklauftemperatur |
| $t_v$ | Vorlauftemperatur |

| | |
|---|---|
| $\eta$ | Wirkungsgrad |
| $\lambda$ | Rohrreibungsbeiwert |
| $\mu$ | dynamische Viskosität |
| $\rho$ | Dichte |
| $\zeta$ | Armaturwiderstandsbeiwert |

**Indices**

| | |
|---|---|
| A | Auslegungsfall |
| An | Anlage |
| D | Differenzdruck |
| E | Einzelwiderstand |
| HK | Heizkörper |
| i | Anzahl der Rohrabschnitte |

L       Luft
m       Strangnummer
O       Oberseite
P       Pumpe
real    real
R       Rohr
RL      Rücklauf
U       Unterseite
Um      Umschlagpunkt
V       Ventil
VL      Vorlauf
theo    theoretisch
TL      Teillast

**Patentansprüche**

1.  Regelung einer Heizungsanlage, wobei eine in ein Rohrleitungssystem der Heizungsanlage integrierte Mischarmatur eine Vorlauftemperatur beeinflußt, **dadurch gekennzeichnet, daß** in einem Betriebszustand Schwachlastfall eine Vorlauftemperaturregelung und daß im Betriebszustand Teillast- und Vollastfall eine Massenstromregelung stattfindet.

2.  Regelung einer Heizungsanlage nach Anspruch 1, **dadurch gekennzeichnet, daß** in Abhängigkeit von der Außentemperatur mit der Mischarmatur die Umschaltung zwischen Vorlauftemperaturregelung und Massenstromregelung erfolgt.

3.  Regelung einer Heizungsanlage nach Anspruch 1 oder 2, **dadurch gekennzeichnet, daß** ein intelligenter elektronischer Regelbaustein bei der Umschaltung zwischen der Vorlauftemperaturregelung und der Massenstromregelung das Auftreten von Regelstörungen vermeidet.

4.  Regelung einer Heizungsanlage nach Anspruch 1, 2 oder 3, **dadurch gekennzeichnet, daß** für einen kontrollierten Übergang zwischen den beiden Regelungsarten in Abhängigkeit von der sich ändernden Vorlauftemperatur eine langsame Veränderung des Massenstromes erfolgt.

5.  Regelung einer Heizungsanlage nach Anspruch 1, 2 oder 3, **dadurch gekennzeichnet, daß** bei einer Umschaltung in Abhängigkeit von der Außentemperatur, bei denjenigen Umschaltfällen, bei denen die Umschalttemperatur um einen entsprechenden Wert der Außentemperatur schwankt, eine Umschaltung erst bei deutlicher Überschreitung des Wert der Außentemperatur erfolgt.

6.  Regelung einer Heizungsanlage nach einem der Ansprüche 1 bis 5, **dadurch gekennzeichnet, daß** in der Schaltung eine in einer Einfahrphase der Heizungsanlage festzustellende Hysterese für einen späteren Betrieb fest vorgegeben wird.

7.  Regelung einer Heizungsanlage nach einem der Ansprüche 1 bis 6, **dadurch gekennzeichnet, daß** der Verlauf der Außentemperatur über die Zeit kontrolliert und registiert wird und daß bei eindeutig sinkenden oder steigenden Verlauf der Außentemperatur über mehrere Meßwerte hinaus eine Umschaltung erfolgt.

8.  Regelung einer Heizungsanlage nach einem der Ansprüche 1 bis 7, **dadurch gekennzeichnet, daß** bei einer um den Wert der Umschalttemperatur herum schwankender Außentemperatur die Regelung mit der zuletzt angewandten Regelungsart erfolgt.

**Claims**

1.  Regulation of a heating installation, a mixing fitting integrated into a pipeline system of the heating installation influencing a forward-flow temperature, **characterized in that**, in a light-load operating state, forward-flow temperature regulation takes place, and **in that**, in the part-load and full-load operating states, mass-flow regulation takes place.

**2.** Regulation of a heating installation according to Claim 1, **characterized in that** the change-over between forward-flow temperature regulation and mass-flow regulation is carried out by means of the mixing fitting as a function of the outside temperature.

**3.** Regulation of a heating installation according to Claim 1 or 2, **characterized in that** an intelligent electronic regulating module avoids the occurrence of regulating faults during the change-over between forward-flow temperature regulation and mass-flow regulation.

**4.** Regulation of a heating installation according to Claim 1, 2 or 3, **characterized in that**, for a controlled transition between the two types of regulation, a slow variation in the mass flow takes place as a function of the changing forward-flow temperature.

**5.** Regulation of a heating installation according to Claim 1, 2 or 3, **characterized in that**, in the event of a change-over as a function of the outside temperature in those change-over situations where the change-over temperature fluctuates around a corresponding value of the outside temperature, a change-over takes place only when the value of the outside temperature is markedly exceeded.

**6.** Regulation of a heating installation according to one of Claims 1 to 5, **characterized in that** a hysteresis to be defined in a run-in phase of the heating installation is permanently preset in the circuit for subsequent operation.

**7.** Regulation of a heating installation according to one of Claims 1 to 6, **characterized in that** the profile of the outside temperature is monitored and recorded over time, and **in that** a change-over takes place in the case of an unequivocally falling or rising profile of the outside temperature over a plurality of measurement values.

**8.** Regulation of a heating installation according to one of Claims 1 to 7, **characterized in that**, in the case of an outside temperature fluctuating around the value of the change-over temperature, regulation takes place with the type of regulation last used.

**Revendications**

**1.** Régulation d'un équipement de chauffage, avec laquelle un robinet mélangeur intégré dans un système de conduites de l'équipement de chauffage influence une température d'admission, **caractérisée en ce qu'**une régulation de la température d'admission a lieu dans une situation de fonctionnement en charge réduite et qu'une régulation du débit massique a lieu dans la situation de fonctionnement en charge partielle et en pleine charge.

**2.** Régulation d'un équipement de chauffage selon la revendication 1, **caractérisée en ce que** la commutation entre la régulation de la température d'admission et la régulation du débit massique s'effectue avec le robinet mélangeur en fonction de la température extérieure.

**3.** Régulation d'un équipement de chauffage selon la revendication 1 ou 2, **caractérisée en ce qu'**un module électronique de régulation intelligent empêche l'apparition de perturbations de la régulation lors de la commutation entre la régulation de la température d'admission et la régulation du débit massique.

**4.** Régulation d'un équipement de chauffage selon la revendication 1, 2 ou 3, **caractérisée en ce qu'**une modification lente du débit massique est réalisée en fonction de la température d'admission changeante afin d'assurer une transition contrôlée entre les deux modes de régulation.

**5.** Régulation d'un équipement de chauffage selon la revendication 1, 2 ou 3, **caractérisée en ce que** lors d'une commutation en fonction de la température extérieure, dans les cas de commutation auxquels la température de commutation fluctue autour d'une valeur correspondante de la température extérieure, la commutation n'a lieu qu'en cas de dépassement important de la valeur de la température extérieure.

**6.** Régulation d'un équipement de chauffage selon l'une des revendications 1 à 5, **caractérisée en ce qu'**une hystérésis à déterminer pendant la phase de mise en route de l'équipement de chauffage pour le fonctionnement ultérieur est prédéfinie de manière fixe dans le circuit.

**7.** Régulation d'un équipement de chauffage selon l'une des revendications 1 à 6, **caractérisée en ce que** la pente de la température extérieure dans le temps est contrôlée et enregistrée et qu'une commutation se produit lorsque la pente de la température extérieure est nettement descendante ou ascendante sur plusieurs valeurs mesurées.

8. Régulation d'un équipement de chauffage selon l'une des revendications 1 à 7, **caractérisée en ce qu'**en présence d'une température extérieure qui fluctue autour de la valeur de la température de commutation, la régulation est effectuée avec le dernier mode de régulation utilisé.

Bild 1.1

Bild 1.2

Heizkörperexponent $n = 1,3$

relativer Massenstrom $\dot{m}/\dot{m}$

relative Wärmeleistung $\dot{Q}/\dot{Q}$

14

Bild 3.1

relative Wärmeleistung $\dot{Q}/\dot{Q}_A$

relativer Massenstrom $\dot{m}/\dot{m}_A$

Heizkörperexponent $n = 1,3$

EP 1 163 558 B1

**Bild** 3.2

**Bild** 3.3

**Bild** 3.4

Bild 3.5

**Bild** 3.6

VT          RS

Legende zu

Bild 3, 4

$$\Delta_{p\ R\text{->THV}\ 1} = \text{Druckverlust in Rohrleitungen zum ersten Regelventil}$$

$$\Delta_{p1_{THV}} = \text{Auslegungsdifferenzdruck am ersten Thermostatventil}$$

Bild 3.6

|f| : Frequenzumformer     ⊠: Durchgangsventil     ------: elektrische Leitung

Ⓜ : Motor     •: Verzweigung

⊠ : Dreiwegemischventil     o : Meßwertfühler     ———: Wasserrohr

VT:    Vorlaufverteiler
RS:    Rücklaufsammler